**Europäisches Patentamt**

(19) **European Patent Office**

**Office européen des brevets**

(11) Veröffentlichungsnummer: **0 068 570**
**B1**

(12) **EUROPÄISCHE PATENTSCHRIFT**

(45) Veröffentlichungstag der Patentschrift:
29.08.84

(51) Int. Cl.³: **G 03 B 41/16**

(21) Anmeldenummer: **82200755.5**

(22) Anmeldetag: **18.06.82**

(54) Röntgenuntersuchungsgerät mit wenigstens einem Filmvorratsmagazin.

| | |
|---|---|
| (30) Priorität: **27.06.81 DE 3125397** | (73) Patentinhaber: **Philips Patentverwaltung GmbH, Billstrasse 80, D-2000 Hamburg 28 (DE)** |
| | (84) Benannte Vertragsstaaten: **DE** |
| (43) Veröffentlichungstag der Anmeldung: **05.01.83 Patentblatt 83/1** | |
| | (73) Patentinhaber: **N.V. Philips' Gloeilampenfabrieken, Groenewoudseweg 1, NL-5621 BA Eindhoven (NL)** |
| (45) Bekanntmachung des Hinweises auf die Patenterteilung: **29.08.84 Patentblatt 84/35** | (84) Benannte Vertragsstaaten: **BE FR GB IT** |
| (84) Benannte Vertragsstaaten: **BE DE FR GB IT** | (72) Erfinder: **Kayser, Harald, Heisterkamp 26, D-2000 Wedel (DE)**<br>Erfinder: **Wilfried, Pfeiffer, Berliner Strasse 46, D-2085 Quickborn (DE)** |
| (56) Entgegenhaltungen:<br>**DE - A - 2 137 758**<br>**FR - A - 2 405 499**<br>**US - A - 3 855 476** | (74) Vertreter: **Hartmann, Heinrich, Dipl.-Ing. et al, Philips Patentverwaltung GmbH Billstrasse 80 Postfach 10 51 49, D-2000 Hamburg 28 (DE)** |

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf ein Röntgenuntersuchungsgerät mit einem lichtdicht abgeschlossenen Filmverarbeitungsteil mit wenigstens einem Filmvorratsmagazin für eine Anzahl von Filmblättern, von denen jeweils eins mittels einer Entnahme- und Transporteinrichtung aus dem Filmvorratsmagazin entnehmbar und in eine Aufnahmestation verschiebbar ist.

Röntgenuntersuchungsgeräte dieser Art sind bekannt (US-A-3 891, und DE-A-2 616 926). Bei einer Röntgenaufnahme wird dabei automatisch aus einem der Filmvorratsmagazine ein Film entnommen, in eine Aufnahmestellung transportiert und anschließend in ein Auffangmagazin am Untersuchungsgerät bzw. in eine mit dem Untersuchungsgerät gekoppelte Entwicklungsmaschine.

Die Vorteile eines derartigen Röntgenuntersuchungsgerätes gegenüber einem konventionellen Röntgenuntersuchungsgerät, insbesondere für Bucky-Aufnahmen, bestehen darin, daß der Benutzer nicht bei jeder Aufnahme eine neue Filmkassette mit einem Filmblatt einsetzen muß und daher vorher und nachher ein Be- bzw. Entladen der Kassette in einer Dunkelkammer nicht mehr erforderlich ist, wodurch der Arbeitsanfall wesentlich reduziert wird. Bei einer in das Röntgenuntersuchungsgerät integrierten Entwicklungsmaschine, die heute schon bei vielen Geräten dieser Art zum Technischen Standard gehört, ist eine Dunkelkammer praktisch überflüssig.

Jedoch besteht auch bei solchen in der Regel für Bucky-Aufnahmen verwendeten Geräten relativ häufig das Bedürfnis, Kassettenaufnahmen anzufertigen. Bei Aufnahmen der Extremitäten (Hand oder Fuß) beispielsweise wird auf die Tischplatte des Röntgenuntersuchungsgerätes eine Kassette und auf die Kassette die aufzunehmende Hand gelegt. Wenn der Film für solche Kassettenaufnahmen in einer Dunkelkammer in die Kassette eingesetzt und anschließend in einer Dunkelkammer wieder aus ihr entnommen würde, wäre der Vorteil solcher Geräte praktisch wieder aufgehoben.

Aus diesen Gründen sind Vorrichtungen bekanntgeworden, in die Kassetten eingesetzt werden, um selbsttätig be- oder entladen zu werden (vgl. z. B. DE-A-2 262 358, Fig. 5 und 6 und DE-A-2 438 278, Fig. 7 und 8). Solche als »Tageslichtsystem« bezeichneten Vorrichtungen sind relativ teuer. In der Regel ist für jedes Film- bzw. Kassettenformat ein Tageslichtsystem erforderlich.

Der Erfinder hat sich die Aufgabe gestellt, eine Möglichkeit zum Be- und Entladen zu schaffen, die kein gesondertes Tageslichtsystem und keine Dunkelkammer erfordert.

Ausgehend von einem Röntgenuntersuchungsgerät der eingangs genannten Art wird diese Aufgabe dadurch gelöst, daß der Filmverarbeitungsteil mit einer Kassettenbe- und entladestation versehen ist, die zur Aufnahme einer von außen einführbaren, automatisch zu öffnenden und zu schließenden Kassette dient, und daß zwischen dem (den) Filmvorratsmagazin(en) einerseits und der Aufnahmestation bzw. der Kassettenbe- und -entladestation andererseits eine Filmführungseinrichtung angeordnet ist, die derart umschaltbar ist, daß der Filmtransport entweder von der bzw. zu der Aufnahmestation oder von der bzw. zu der Kassettenbe- und -entladestation erfolgt.

Die Erfindung nutzt die Tatsache aus, daß ein Röntgenuntersuchungsgerät der eingangs genannten Art ohnehin schon wesentliche Funktionen hat, die eine Tageslichtbe- und -entlademaschine kennzeichnen: Es werden Filme aus einem Magazin entnommen, in eine erste Position transportiert und anschließend aus dieser Position in ein Auffangmagazin oder eine Entwicklungsmaschine zurücktransportiert. Ein solches Röntgenuntersuchungsgerät benötigt daher nur noch einen Einsatz (Kassettenbe- und -entladestation), in den die Kassette lichtdicht einführbar ist und in den sie automatisch geöffnet und geschlossen werden kann, sowie eine Filmführungseinrichtung, die es gestattet, Filmblätter entweder in die Aufnahmeposition und zurück oder in die Kassettenbe- und -entladestation zu transportieren.

Die Erfindung wird nachstehend anhand der Zeichnung näher erläutert. Es zeigt

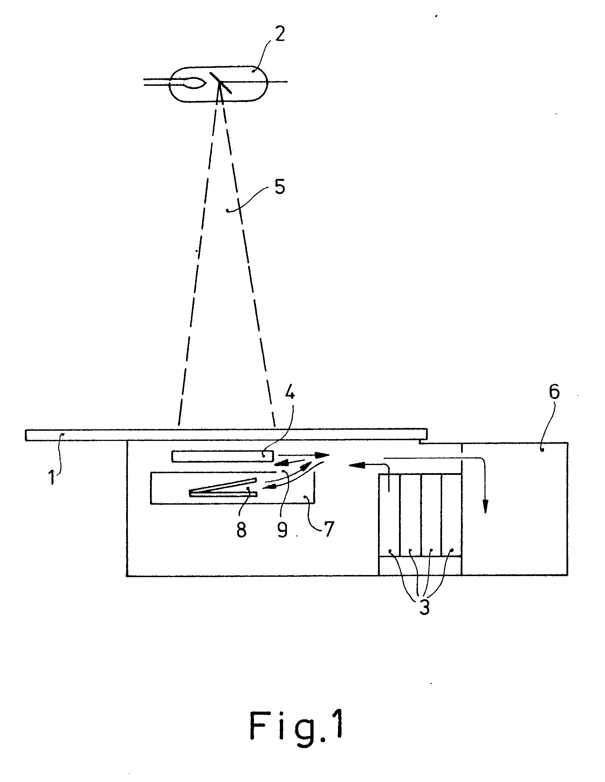

Fig. 1 eine schematische Darstellung eines erfindungsgemäßen Röntgenuntersuchungsgerätes in einer Seitenansicht,

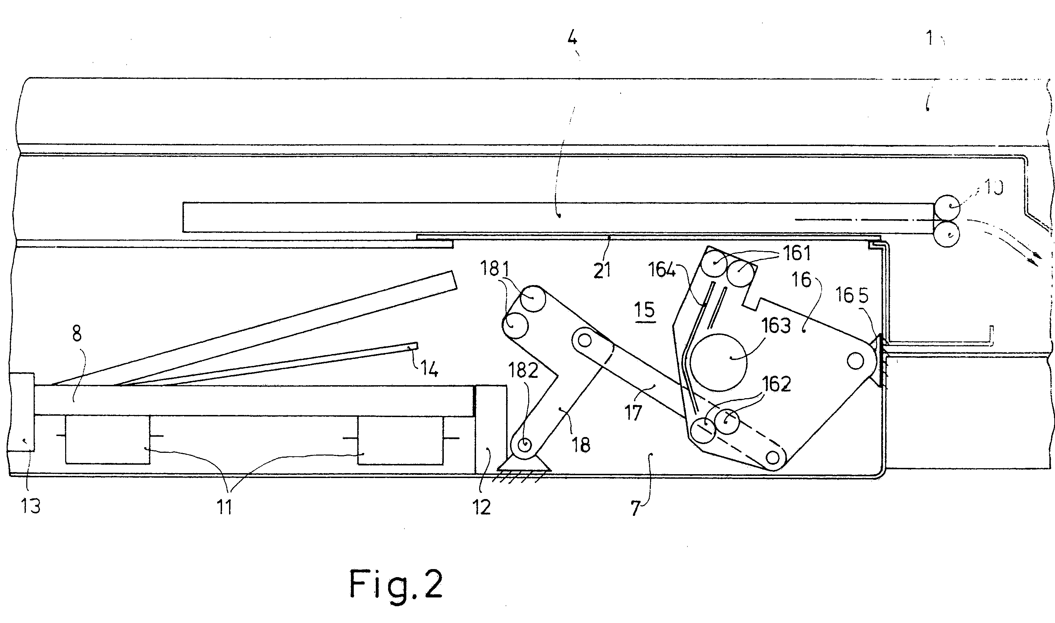

Fig. 2 einen Ausschnitt aus Fig. 1 in einer ersten Betriebsart, und

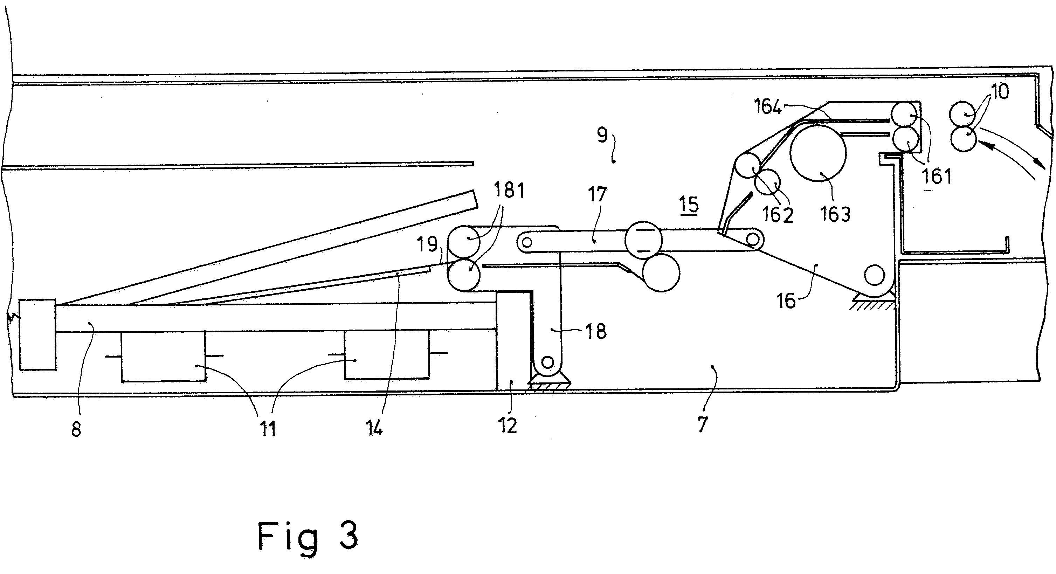

Fig. 3 diesen Ausschnitt bei der zweiten Betriebsart.

Fig. 1 zeigt ein erfindungsgemäßes Röntgenuntersuchungsgerät zur Anfertigung von Bucky-Aufnahmen. Das Röntgenuntersuchungsgerät besitzt eine horizontal angeordnete Patientenlagerungsplatte 1, oberhalb der sich der schematisch angedeutete Röntgenstrahler 2 befindet und unterhalb der sich der Filmverarbeitungsteil befindet. Dieser gegen Lichteinfall abgedichtete Filmverarbeitungsteil enthält mehrere Filmvorratsmagazine 3, aus denen jeweils ein Filmblatt automatisch entnehmbar und mittels einer nicht näher dargestellten Transportvorrichtung, zu der auch ein schematisch angedeuteter, in horizontaler Richtung verfahrbarer, mit Verstärkerfolien versehener Filmwagen 4 gehört, in die durch das gestrichelte Strahlenbündel 5 angedeutete Aufnahmeposition verfahrbar ist. Nach der Belichtung wird das Filmblatt mit Hilfe der Transporteinrichtung aus dem Strahlengang heraus in eine Entwicklungsmaschine 6 transportiert; an ihrer Stelle kann aber auch ein Filmauffangmagazin benutzt werden. Insoweit als bisher beschrieben ist das Röntgenuntersuchungsgerät im wesentlichen bekannt (vgl. DE-A-76 080, US-A-3 891 850 bzw. Laufraster-Aufnahmetisch RAPIDO der Fa. Picker).

Erfindungsgemäß befindet sich unterhalb der Ebene des Filmwagens eine Kassettenbe- und -entladestation 7, in die eine zu be- oder entladende Kassette 8 in einer zur Zeichenebene senkrechten Ebene durch eine nicht näher dargestellte Abdeckklappe an der Vorderseite des Gerätes einführbar ist. Die kastenartige Kassettenbe- und -entladestation besitzt auf dem dem Filmvorratsmagazin 3 zugewandten Teil ihrer Oberfläche eine Öffnung 9, die durch einen nicht näher dargestellten Schieber lichtdicht abschließbar ist und durch die Filmblätter in die Einrichtung 7 bzw. die Kassette 8 ein- und ausführbar sind. Zwischen den Filmvorratsmagazinen einerseits und der Kassettenbe- und -entladestation bzw. der Aufnahmeposition andererseits befindet sich eine in Fig. 1 nicht dargestellte Filmführungseinrichtung, die dazu dient, ein Filmblatt entweder in die Aufnahmeposition bzw. aus der Aufnahmeposition zurück in die Entwicklungsmaschine 6 oder aus dem Filmvorratsmagazin 3 in die Kassette 8 bzw. aus der Kassette in die Entwicklungsmaschine 6 zu führen.

Die Kassettenbe- und -entladeeinrichtung besteht auf ihrer Oberseite zumindest in dem durch das Strahlenbündel 5 erfaßbaren Bereich aus einem die Röntgenstrahlung nahezu vollständig absorbierenden Material, so daß ein in die Kassette eingeführter Film in der Kassettenbe- und -entladestation nicht durch Röntgenstrahlung belichtet wird.

Die Fig. 2 und 3 zeigen einen Ausschnitt aus der Kassettenbe- und -entladestation und die Filmführungseinrichtung in einer ersten Betriebsstellung, in der die Kassette be- bzw. entladen werden kann (Fig. 3) und in einer zweiten Betriebsstellung zur Anfertigung von Bucky-Aufnahmen (Fig. 2). In Fig. 2 ist von der Entlade- und Transporteinrichtung, die jeweils ein Filmblatt aus einem der Filmvorratsmagazine 6 entnimmt und in die Aufnahmestellung bzw. in die Kassettenbe- und -entladestation und zurücktransportiert, nur der Filmwagen 4 und ein in zwei Richtungen antreibbares ortsfestes Transportrollenpaar 10 dargestellt. Das Filmblatt wird zunächst mit Hilfe u. a. auch des Transportrollenpaares 10 in den Filmwagen 4 eingeführt, der danach in bekannter Weise in die Aufnahmestellung und zurücktransportiert wird, wonach das Filmblatt wieder entnommen werden kann. In dieser Betriebsstellung ist die Öffnung an der Oberseite der unterhalb der Filmwagenebene befindlichen Kassettenbe- und -entladestation durch einen Lichtschieber 21 lichtdicht verschlossen. Dadurch ist es möglich, die Kassette 8 bereits während des Bucky-Aufnahmebetriebes in die Kassettenbe- und -entladestation einzuführen, ohne daß die Gefahr besteht, daß durch die nicht näher dargestellte Klappe, durch die die Kassette eingeführt wird, und die Öffnung 9 in der Kassettenbe- und -entladestation Licht auf die im Bucky-Aufnahmebetrieb zu belichtenden Filmblätter fällt.

Die Kassettenbe- und -entladestation 7 enthält ein Transportwalzenpaar 11, dessen Drehachsen parallel zur Zeichenebene verlaufen und um die nicht näher dargestellten Transportbänder geführt sind, mit deren Hilfe die Kassette 8 senkrecht zur Zeichenebene in eine durch einen nicht näher dargestellten Anschlag definierte Position transportiert werden kann. Ein seitlicher Anschlag 12 stellt sicher, daß die Öffnungsseite der Kassette 8 ebenfalls eine definierte Position einnimmt, wobei ein gegen die gegenüberliegende Seite mit Federkraft gedrückter Anschlag 13 dafür sorgt, daß diese Lage beibehalten bleibt. Die Kassette ist so ausgebildet, daß sie in der Kassettenbe- und -entladestation automatisch geöffnet und geschlossen werden kann. Eine hierfür geeignete Kassette ist in der DE-A-3 113 793 beschrieben. Der darin enthaltene Öffnungsmechanismus stellt sicher, daß nach dem Öffnen der Kassettendeckel nach oben geschwenkt wird und ebenso — jedoch nur etwa halb so weit — die in der Kassette 8 befindliche Filmandruckplatte 14. Ein in der Kassette befindlicher Film, der dann auf der Filmandruckplatte 14 liegt, kann dann leicht entnommen werden, und ebenso leicht läßt sich in dieser Öffnungsstellung ein Film einführen.

In der Kassettenbe- und -entladestation befindet sich außerdem noch eine Filmführungseinrichtung 15 (die grundsätzlich aber auch außerhalb angeordnet sein kann). Die Filmführungseinrichtung 15 besteht aus drei Teilen 16, 17 und 18, die miteinander schwenkbar verbunden sind. Der Teil 16 ist mit zwei Transportrollenpaaren 161 und 162 versehen, von denen wenigstens das eine (161) antreibbar ist. Außerdem befinden sich auf diesem Teil eine Führungsrolle 163 und Führungsschienen 164. Das Teil 16 ist bei 165 um eine ortsfeste zur Zeichenebene senkrechte Achse schwenkbar gelagert.

Der zweite Teil 18 ist ebenfalls mit einem angetriebenen Rollenpaar 181 versehen und bei 182 um eine ortsfeste ebenfalls zur Zeichenebene senkrechte Achse schwenkbar gelagert. Die beiden Teile 16 und 18 sind durch einen Arm 17 gekoppelt, der mit diesen beiden Teilen gelenkig verbunden ist.

Fig. 3 zeigt die Anordnung in einer Betriebsphase, in der der Lichtschieber 21 und der Filmwagen 9 (nach links) beiseite gefahren sind, so daß die Öffnung der Kassettenbe- und -entladestation frei wird. Außerdem ist die Filmführungseinrichtung in eine solche Stellung geschwenkt, daß die Rollenpaare 161 sich neben dem festen Rollenpaar 10 und auf etwa gleicher Höhe wie dieses befinden. Über den Arm 17 wird dabei das Teil 18 derart mitgeschwenkt, daß sich die Rollenpaare 181 dicht vor der Andruckplatte 14 befinden, so daß ein darauf befindlicher Film 19 erfaßt werden kann. Die beschriebene Schwenkung der Filmführungseinrichtung 15 kann z. B. mittels eines pneumatisch oder hydraulisch verstellbaren Zylinders erfolgen, der auf einen an geeigneter Stelle an einem der Teile 16 bis 18 angebrachten Anschlag einwirkt.

In der in Fig. 3 dargestellten Stellung wird der Film 19 mit Hilfe der Antriebsrollen 181 aus der Kassette 8 entnommen und über die an der Filmführungseinrichtung 15 vorgesehenen Führungsrollen und Führungsschienen bis zu dem Transportrollenpaar 161 weitertransportiert, wonach es von den Rollen 10 ergriffen wird. Das Beladen der Kassette erfolgt nach Umkehr der Antriebsrichtung der Transportrollen, wobei ein unbelichtetes Filmblatt auf demselben Weg, jedoch in entgegengesetzter Richtung in die Kassette 8 transportiert wird.

Danach kann die Filmführungseinrichtung 15 wieder in ihre Stellung gemäß Fig. 2 zurückgekippt und die Öffnung 9 wieder durch den Lichtschieber 21 verschlossen werden. Nach dem automatischen Schließen der Kassette und dem Einschalten der Transportwalzen mit entgegengesetzter Drehrichtung kann die Kassette wieder entnommen werden.

**Patentansprüche**

1. Röntgenuntersuchungsgerät mit einem lichtdicht abgeschlossenen Filmverarbeitungsteil mit wenigstens einem Filmvorratsmagazin für eine Anzahl von Filmblättern, von denen jeweils eins mittels einer Entnahme- und Transporteinrichtung aus dem Filmvorratsmagazin entnehmbar und in eine Aufnahmestation verschiebbar ist, dadurch gekennzeichnet, daß der Filmverarbeitungsteil mit einer Kassettenbe- und -entladestation (7) versehen ist, die zur Aufnahme einer von außen einführbaren, automatisch zu öffnenden und zu schließenden Kassette (8) dient, und daß zwischen dem (den) Filmvorratsmagazin(en) (3) einerseits und der Aufnahmestation bzw. der Kassettenbe- und -entladestation (7) andererseits eine Filmführungseinrichtung (15) angeordnet ist, die derart umschaltbar ist, daß der Filmtransport entweder von der bzw. zu der Aufnahmestation (4, 5) oder von der bzw. zu der Kassettenbe- und -entladestation (7) erfolgt.

2. Röntgenuntersuchungsgerät nach Anspruch 1, wobei die Filmblätter im wesentlichen in horizontaler Richtung transportiert werden, dadurch gekennzeichnet, daß die Kassettenbe- und -entladestation (7) sich unterhalb der Aufnahmestation (4, 5) befindet und von dieser durch eine die Röntgenstrahlung wenigstens nahezu vollständig absorbierende Abschirmung getrennt ist.

3. Röntgenuntersuchungsgerät nach einem der vorhergehenden Ansprüche, dadurch gekennzeichnet, daß die Kassettenbe- und -entladestation (7) durch einen Lichtschieber (21) lichtdicht gegenüber dem übrigen Filmverarbeitungsteil abschließbar ist.

**Claims**

1. An X-ray examination apparatus comprising a light-tight film processing section with at least one film storage magazine for a number of film sheets which can be removed therefrom one at a time to be transported to an exposure position by means of an unloading and transport device, characterized in that the film processing section comprises a cassette loading and unloading station (7) which serves to accommodate a cassette (8) which can be introduced from the outside and which is to be automatically openend and closed, there being arranged between the film storage magazine (magazines) (3) on the one side and the exposure position or the cassette loading and unloading station (7) on the other side a film guide device (15) which can be switched over so that the film transport takes place either from or to the exposure position (4, 5) or from or to the cassette loading and unloading station (7).

2. An X-ray examination apparatus as claimed in claim 1, in which the film sheets are transported essentially in the horizontal direction, characterized in that the cassette loading and unloading station (7) is situated underneath the exposure position (4, 5) and is separated therefrom by a shield which absorbs the X-rays at least substantially completely.

3. An X-ray examination apparatus as claimed in any one of the preceding claims, characterized in that the cassette loading and unloading station (7) can be separated from the remainder of the film processing section in a light-tight manner by means of a light slide (21).

**Revendications**

1. Appareil d'examen radiologique présentant une partie de traitement de film fermée de façon étanche à la lumière, comportant au moins un compartiment de réserve de film pour plusieurs feuilles de film, dont chaque fois une feuille peut être prise, à l'aide d'un dispositif de prise et de transport, du compartiment de réserve de film et transportée dans un poste de prise de vues, caractérisé en ce que la partie de traitement de film est munie d'un poste de charge et de décharge de cassettes (7), qui sert à loger une cassette (8) à introduire à partir de l'extérieur, à ouvrir et à fermer automatiquement et que, d'un côté, entre le(s) compartiment(s) de réserve de film (3) et, de l'autre côté, le poste de prise de vues respectivement le poste de charge et de décharge de cassettes (7) est prévu un dispositif de guidage de film (15) pouvant être commandé de façon que le transport de film s'effectue à partir du poste de prise de vues (4, 5) ou vers ce dernier ou à partir du poste de charge et de décharge de cassettes (7) ou vers celui-ci.

2. Appareil d'examen radiologique selon la revendication 1, dans lequel les feuilles de film sont transportées essentiellement dans la direction horizontale, caractérisé en ce que le poste de charge et de décharge de cassettes se trouve au-dessous du poste de prise de vues (5), et on est séparé par un blindage absorbant au moins pratiquement les rayons X.

3. Appareil d'examen radiologique selon l'une des revendications précédentes, caractérisé en ce que le poste de charge et de décharge de cassette (7) peut être fermé, d'une façon étanche à la lumière, par une coulisse à lumière (21) par rapport au reste de la partie de traitement de film.

Fig.1

Fig.2

Fig 3

0 068 570